# EUROPEAN PATENT APPLICATION

(11) **EP 4 844 474 A1**
(43) Date of publication of application: **25.11.2026**
(21) Application number: 25741410.2
(22) Date of filing: 09.01.2025
(51) Int. Cl.: G02B 30/25

(54) **DISPLAY DEVICE AND MANUFACTURING METHOD THEREFOR**

(30) Priority: 16.01.2024 CN 202410065629
(71) Applicant: LEIA Inc., Nashua, NH 03062 (US); Leia Electronics (Suzhou) Co., Ltd., Suzhou, Jiangsu 215500 (CN)
(72) Inventor: ZHU, Junping, Suzhou, Jiangsu 215500 (CN)
(74) Representative: Carpmaels & Ransford LLP
(86) International application number: PCT/CN2025/071547
(87) International publication number: WO 2025/152848

(57) **Abstract**

A display device and a manufacturing method thereof. The display device comprises a display panel, a liquid crystal cell and a linear polarization rotation structure disposed between the display panel and the liquid crystal cell, the liquid crystal cell is disposed at a light-exiting side of the display panel, and the liquid crystal cell includes a first substrate and a second substrate disposed opposite to each other, a lens group, a first alignment layer, a liquid crystal layer and a second alignment layer, the lens group is located between the first substrate and the second substrate, and a plurality of lenses of the lens group extend along a first direction. Alignment directions of the first alignment layer and the second alignment layer are parallel to the first direction, a polarization direction of linearly polarized light exited from the display panel has an included angle with the first direction, and the linear polarization rotation structure is configured to rotate the polarization direction of the exiting light to be parallel to the first direction. Because arrangement directions of liquid crystal molecules needs to be parallel to the polarization direction, the arrangement directions of the liquid crystal molecules can be parallel to the first direction, and the arrangement of liquid crystal molecules has better consistency, thus greatly reducing occurrence of liquid crystal molecules disclination.

## Description

The present application claims the priority to the Chinese Patent Application No. 202410065629.8, filed on January 16, 2024, the entire contents of which are incorporated herein by reference as part of the present application.

### TECHNICAL FIELD

Embodiments of the present disclosure relate to a display device and a manufacturing method thereof.

### BACKGROUND

Stereoscopic vision is generated because the left eye and the right eye of person receive images from different angles, and after being synthesized by the brain, the sense of hierarchy and depth of the perceived object is obtained.

Based on birefringence of liquid crystal, the liquid crystal cell can perform electrical focusing by controlling distribution of liquid crystal molecules with voltage, and is widely used in focusing devices and human eye magnification devices. Especially in 3D display, it has made outstanding contributions. Application of liquid crystal cells can get rid of constraints of 3D glasses on human eyes and achieve naked-eye 3D display.

### SUMMARY

In order to solve the problem of poor consistency in arrangement of liquid crystal molecules on the alignment layer caused by inconsistency between the extending direction of the lens of the liquid crystal cell and the alignment direction of the alignment layer, embodiments of the present disclosure provide a display device and a manufacturing method thereof, which rotate a polarization direction of exiting light of a display panel to be parallel to an extending direction of a lens, so that arrangement directions of liquid crystal molecules on the alignment layer can have better consistency.

At least one embodiment of the present disclosure provides a display device, including: a display panel, wherein exiting light from the display panel is linearly polarized light, a liquid crystal cell, disposed at a light-exiting side of the display panel and including: a first substrate and a second substrate disposed opposite to each other; a lens group, disposed on the first substrate and located between the first substrate and the second substrate, and including a plurality of lenses, wherein the plurality of lenses extend in a first direction and are arranged in a second direction intersecting with the first direction; a first alignment layer, disposed at a side of the lens group close to the second substrate; a liquid crystal layer, disposed at a side of the first alignment layer close to the second substrate; and a second alignment layer, disposed at a side of the second substrate facing the liquid crystal layer, a linear polarization rotation structure, disposed between the display panel and the liquid crystal cell, wherein alignment directions of the first alignment layer and the second alignment layer are parallel to the first direction, a polarization direction of the linearly polarized light exited from the display panel has an included angle with the first direction, and the linear polarization rotation structure is configured to rotate the polarization direction of the exiting light to be parallel to the first direction.

For example, in the display device according to an embodiment of the present disclosure, a side of one of the plurality of lenses close to the first alignment layer includes a curved surface.

For example, in the display device according to an embodiment of the present disclosure, the first alignment layer is conformally formed on a surface of the lens group.

For example, in the display device according to an embodiment of the present disclosure, the linear polarization rotation structure includes a half-wave retarder, and the half-wave retarder includes a fast axis and a slow axis, the fast axis is located on a center line of the included angle or the slow axis is located on the center line of the included angle.

For example, in the display device according to an embodiment of the present disclosure, the first alignment layer and the second alignment layer are aligned by a rubbing alignment process, and a rubbing direction of the rubbing alignment process is parallel to the first direction.

For example, in the display device according to an embodiment of the present disclosure, the liquid crystal cell further includes: a first electrode layer, disposed between the first substrate and the lens group; and a second electrode layer, disposed between the second alignment layer and the second substrate, wherein the first electrode layer and the second electrode layer are configured to apply an electric field to liquid crystal molecules of the liquid crystal layer to drive the liquid crystal molecules to deflect.

For example, in the display device according to an embodiment of the present disclosure, the liquid crystal cell further includes: a first electrode layer, disposed between the first substrate and the lens group; a second electrode layer, disposed between the first electrode layer and the lens group; and an insulating layer, disposed between the first electrode layer and the second electrode layer, wherein the second electrode layer includes a plurality of strip electrodes, and the first electrode layer and the second electrode layer are configured to apply an electric field to liquid crystal molecules of the liquid crystal layer to drive the liquid crystal molecules to deflect.

For example, in the display device according to an embodiment of the present disclosure, the liquid crystal cell further includes: an electrode layer, disposed between the first substrate and the lens group, wherein the electrode layer includes a plurality of first strip electrodes and a plurality of second strip electrodes, the plurality of first strip electrodes and the plurality of second strip electrodes are alternately arranged at intervals along the second direction, and the plurality of first strip electrodes and the plurality of second strip electrodes are configured to apply an electric field to liquid crystal molecules of the liquid crystal layer to drive the liquid crystal molecules to deflect.

For example, in the display device according to an embodiment of the present disclosure, refractive indices of the plurality of lenses of the lens group are the same as a refractive index of the liquid crystal layer in an axial direction of the liquid crystal molecules.

For example, in the display device according to an embodiment of the present disclosure, the display panel and the liquid crystal cell have substantially a same planar shape of a rectangle, and an included angle between the first direction and an edge of the rectangle is an acute angle.

At least one embodiment of the present disclosure provides a manufacturing method of a display device, including: providing a display panel, a linear polarization rotation structure and a liquid crystal cell; and bonding the display panel, the linear polarization rotation structure and the liquid crystal cell together to form the display device, wherein exiting light from the display panel is linearly polarized light, and the linear polarization rotation structure is configured to rotate a polarization direction of the linearly polarized light to a first direction, the liquid crystal cell includes a lens group, a first alignment layer and a liquid crystal layer which are sequentially stacked, wherein the lens group includes a plurality of lenses extending in the first direction and arranged in a second direction intersecting with the first direction, an alignment direction of the first alignment layer is parallel to the first direction.

For example, in the manufacturing method according to an embodiment of the present disclosure, the linear polarization rotation structure includes a half-wave retarder, the half-wave retarder includes a fast axis and a slow axis, and the polarization direction of the linearly polarized light has an included angle with the first direction, bonding the display panel, the linear polarization rotation structure and the liquid crystal cell together includes: setting the fast axis or the slow axis of the half-wave retarder to be parallel to a center line of the included angle.

For example, in the manufacturing method according to an embodiment of the present disclosure, providing the liquid crystal cell includes: providing a first substrate and a second substrate, forming the lens group on the first substrate, forming the first alignment layer on a surface of the lens group, performing an alignment process on the first alignment layer so that the alignment direction of the first alignment layer is parallel to the first direction, forming a second alignment layer on the second substrate, performing an alignment process on the second alignment layer so that an alignment direction of the second alignment layer is parallel to the first direction.

For example, in the manufacturing method according to an embodiment of the present disclosure, performing the alignment process on the first alignment layer includes: using a rubbing alignment process to align the first alignment layer in the first direction.

For example, in the manufacturing method according to an embodiment of the present disclosure, providing the liquid crystal cell includes: providing a first substrate and a second substrate, forming the lens group on the first substrate, performing an alignment process on a surface of the lens group to form the first alignment layer, forming a second alignment layer on the second substrate, performing an alignment process on the second alignment layer so that an alignment direction of the second alignment layer is parallel to the first direction.

For example, in the manufacturing method according to an embodiment of the present disclosure, providing the liquid crystal cell includes: providing a first substrate and a second substrate, forming the lens group and the first alignment layer on the first substrate, forming a second alignment layer on the second substrate, performing an alignment process on the second alignment layer so that an alignment direction of the second alignment layer is parallel to the first direction, wherein the first alignment layer is formed on a surface of the lens group through an integral molding process.

### BRIEF DESCRIPTION OF THE DRAWINGS

To more clearly illustrate technical solutions of embodiments of the present disclosure, drawings of the embodiments will be briefly described below. It is evident that the drawings described below only relate to some embodiments of the present disclosure, and are not limitations to the present disclosure.
FIG. 1 is a schematic top view of a liquid crystal cell of a display device being aligned by a rubbing alignment process;
FIG. 2 is a schematic view illustrating that an alignment direction of an alignment layer of the liquid crystal cell shown in FIG. 1 is different from an extending direction of lenses;
FIG. 3 is a schematic cross-sectional view of a display device provided by an embodiment of the present disclosure;
FIG. 4 is a schematic view of rotation of a polarization direction of light of the display device shown in FIG. 3;
FIG. 5 is a schematic view illustrating that an alignment direction of an alignment layer of the liquid crystal cell shown in FIG. 3 is the same as an extending direction of lenses;
FIG. 6 is a schematic view of the liquid crystal cell shown in FIG. 3 using a rubbing alignment process;
FIG. 7 is a schematic cross-sectional view of another display device provided by an embodiment of the present disclosure;
FIG. 8 is a schematic cross-sectional view of still another display device provided by an embodiment of the present disclosure; and
FIG. 9 is a flowchart of a manufacturing method of a display device provided by an embodiment of the present disclosure.

### DETAILED DESCRIPTION OF THE INVENTION

To make objectives, technical solutions and advantages of embodiments of the present disclosure clearer, technical solutions of embodiments of the present disclosure will be described clearly and completely below with reference to drawings of embodiments of the present disclosure. It is evident that the described embodiments are part of embodiments of the present disclosure, rather than all of the embodiments. Based on the described embodiments of the present disclosure, all other embodiments obtained by those of ordinary skill in the art without creative efforts fall within the protection scope of the present disclosure.

Unless otherwise defined, technical terms or scientific terms used in the present disclosure should have ordinary meanings as understood by those of ordinary skill in the art to which the present disclosure belongs. "First", "second" and similar words used in the present disclosure do not indicate any sequence, quantity or importance, but are only used to distinguish different components. Words such as "comprising" or "including" mean that elements or objects appearing before such words encompass the elements or objects listed after such words and their equivalents, but do not exclude other elements or objects. Words such as "connected" or "coupled" are not limited to physical or mechanical connections, but may include electrical connections, whether direct or indirect.

Unless otherwise defined, "parallel", "perpendicular" and "identical" and the like used in embodiments of the present disclosure include strictly "parallel", "perpendicular", "identical" and the like, as well as "substantially parallel", "substantially perpendicular", "substantially identical" and the like which include certain errors. For example, "substantially" may mean that a difference between compared objects is within 10% or 5% of an average value of the compared objects. Where a number of a component or element is not specifically pointed out in the following description of embodiments of the present disclosure, it means that the component or element may be one or more, or may be understood as at least one. "At least one" means one or more, and "plural" or "multiple" means at least two. "Disposed in a same layer" in embodiments of the present disclosure refers to a relationship between multiple film layers formed by a same material after undergoing a same step (e.g., one patterning process). "Same layer" herein does not always mean that thicknesses of multiple film layers are the same or heights of multiple film layers in cross-sectional views are the same.

When the liquid crystal cell is used for three-dimensional display, the liquid crystal cell is located at the light-exiting side of a display panel, and the alignment direction of the alignment layer of the liquid crystal cell needs to be the same as the polarization direction of exiting light of the display panel. Typically, the extending direction of the lens of the liquid crystal cell is different from the polarization direction of the exiting light of the display panel, resulting in inconsistency between the extending direction of the lens and the alignment direction of the alignment layer. If the extending direction of the lens is inconsistent with the alignment direction of the alignment layer, the contour of the lens is undulating and uneven in the alignment direction of the alignment layer. Since the alignment layer is coated on the lens, the contour of the lens affects arrangement of liquid crystal molecules on the alignment layer, and consistency of the arrangement of liquid crystal molecules becomes poor.

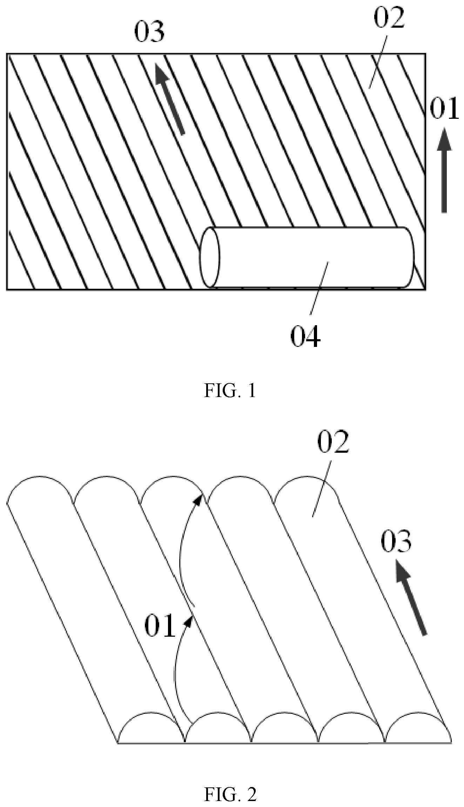

FIG. 1 is a schematic top view of a liquid crystal cell of a display device being aligned by a rubbing alignment process; FIG. 2 is a schematic view illustrating that an alignment direction of an alignment layer of the liquid crystal cell shown in FIG. 1 is different from an extending direction of a lens. As shown in FIG. 1 and FIG. 2, a polarization direction of exiting light of a display panel of a display device is 01, and correspondingly, an alignment direction of an alignment layer is 01. However, an extending direction 03 of a lens 02 of the liquid crystal cell is different from the alignment direction 01 of the alignment layer formed on the lens 02. For example, when the alignment layer is aligned by using a rubbing alignment process, a rubbing direction of a rubbing roller 04 of the rubbing alignment process is 01, and the rubbing direction 01 is not the same as the extending direction 03 of the lens 02. As shown in FIG. 2, in the alignment direction 01 of the alignment layer, a contour of the lens is undulating and uneven. On one hand, at positions between adjacent lenses 02, the rubbing roller 04 may rub unevenly or even not reach; on the other hand, after the rubbing alignment process is completed, in the alignment direction 01 of the alignment layer, the contour of the lens affects arrangement of liquid crystal molecules on the alignment layer, and consistency of arrangement directions of liquid crystal molecules become poor.

Embodiments of the present disclosure provide a display device and a manufacturing method thereof. The display device includes a display panel, a liquid crystal cell and a linear polarization rotation structure, exiting light from the display panel is linearly polarized light, and the liquid crystal cell is disposed at a light-exiting side of the display panel. The liquid crystal cell includes a first substrate and a second substrate disposed opposite to each other, a lens group, a first alignment layer, a liquid crystal layer and a second alignment layer, the lens group is disposed on the first substrate and located between the first substrate and the second substrate. The lens group includes a plurality of lenses, the plurality of lenses extend in a first direction and are arranged in a second direction intersecting with the first direction, the first alignment layer is disposed at a side of the lens group close to the second substrate, the liquid crystal layer is disposed at a side of the first alignment layer close to the second substrate, the second alignment layer is disposed at a side of the second substrate facing the liquid crystal layer, and the linear polarization rotation structure is disposed between the display panel and the liquid crystal cell. Alignment directions of the first alignment layer and the second alignment layer are parallel to the first direction, a polarization direction of the linearly polarized light exited from the display panel has an included angle with the first direction, and the linear polarization rotation structure is configured to rotate the polarization direction of the exiting light to be parallel to the first direction.

In the display device provided by embodiments of the present disclosure, since arrangement directions of liquid crystal molecules (e.g., long axis directions of the liquid crystal molecules) needs to be parallel to the polarization direction of the exiting light of the display panel, that is, the alignment direction of the first alignment layer needs to be parallel to the polarization direction of the exiting light of the display panel, by rotating the polarization direction of the linearly polarized light exited from the display panel to be parallel to the first direction through the linear polarization rotation structure, the alignment direction of the first alignment layer is parallel to the first direction, and the alignment direction of the first alignment layer is parallel to an extending direction of the lens. After being arranged through the first alignment layer, the arrangement directions of the liquid crystal molecules can be arranged along the extending direction of the lens, avoiding an adverse effect on arrangement of the liquid crystal molecules caused by a difference between the extending direction of the lens and the alignment direction of the first alignment layer, so that the arrangement directions of the liquid crystal molecules on the first alignment layer can have better consistency, greatly reducing occurrence of liquid crystal molecule disclination, and improving the display effect of the display device.

Hereinafter, the display device and the manufacturing method thereof provided by embodiments of the present disclosure will be described in detail with reference to the accompanying drawings.

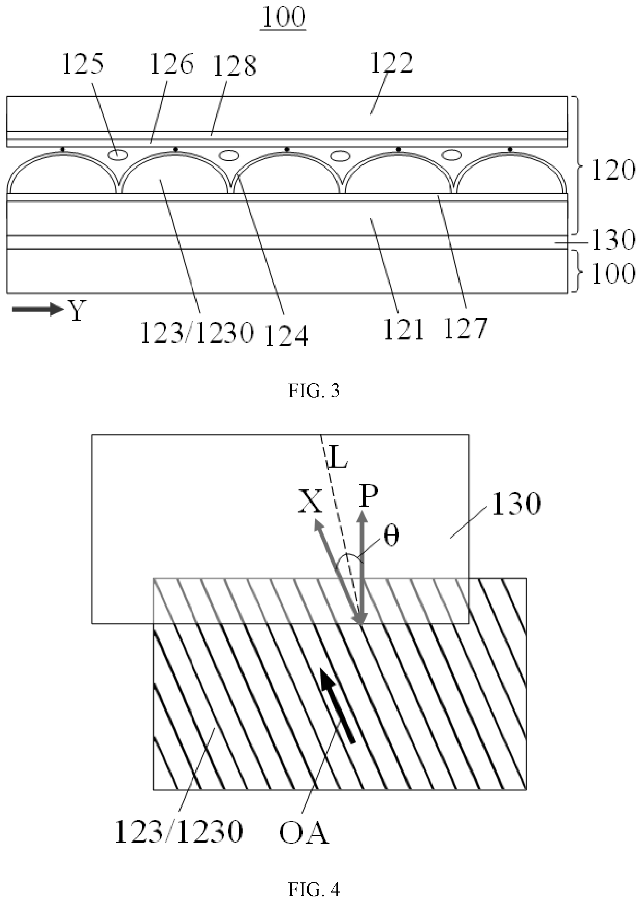

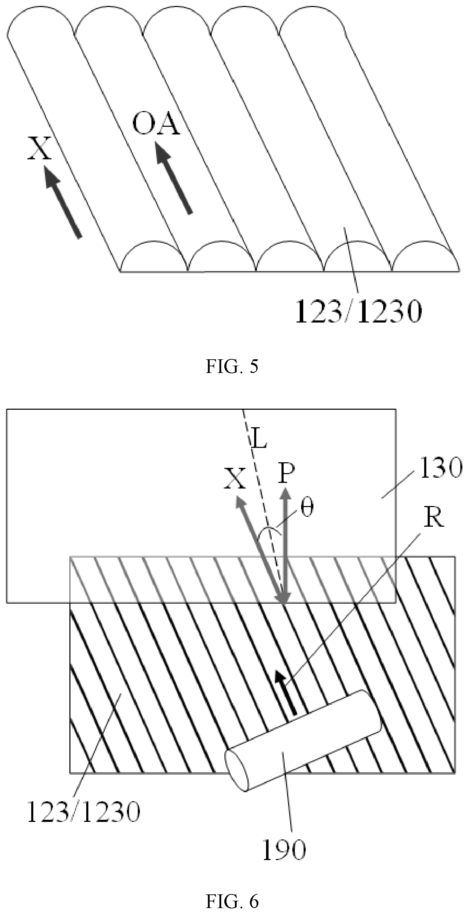

An embodiment of the present disclosure provides a display device. FIG. 3 is a schematic cross-sectional view of a display device provided by an embodiment of the present disclosure; FIG. 4 is a schematic view of rotation of a polarization direction of light of the display device shown in FIG. 3; FIG. 5 is a schematic view illustrating that an alignment direction of an alignment layer of the liquid crystal cell shown in FIG. 3 is the same as an extending direction of a lens. As shown in FIG. 3 to FIG. 5, a display device 100 includes a display panel 110, a liquid crystal cell 120 and a linear polarization rotation structure 130. Exiting light of the display panel 110 is linearly polarized light, the liquid crystal cell 120 is disposed at a light-exiting side of the display panel 110, and the liquid crystal cell 120 includes a first substrate 121 and a second substrate 122 disposed opposite to each other, a lens group 123, a first alignment layer 124, a liquid crystal layer 125 and a second alignment layer 126. The lens group 123 is disposed on the first substrate 121 and located between the first substrate 121 and the second substrate 122, the lens group 123 includes a plurality of lenses 1230, the plurality of lenses 1230 extend in a first direction X and are arranged in a second direction Y intersecting with the first direction X, the first alignment layer 124 is disposed at a side of the lens group 123 close to the second substrate 122, the liquid crystal layer 125 is disposed at a side of the first alignment layer 124 close to the second substrate 122, the second alignment layer 126 is disposed at a side of the second substrate 122 facing the liquid crystal layer 125, and the linear polarization rotation structure 130 is disposed between the display panel 110 and the liquid crystal cell 120. Alignment directions OA of the first alignment layer 124 and the second alignment layer 126 are parallel to the first direction X, a polarization direction P of the linearly polarized light exited from the display panel 110 has an included angle θ with the first direction X, and the linear polarization rotation structure 130 is configured to rotate the polarization direction P of the exiting light to be parallel to the first direction X.

In the display device 100 provided by the embodiment of the present disclosure, since arrangement directions of liquid crystal molecules (e.g., long axis directions of the liquid crystal molecules) needs to be parallel to the polarization direction P of the exiting light of the display panel 110, that is, the alignment direction OA of the first alignment layer 124 needs to be parallel to the polarization direction P of the exiting light of the display panel 110, by rotating the polarization direction P of the linearly polarized light exited from the display panel 110 to be parallel to the first direction X through the linear polarization rotation structure 130, the alignment direction OA of the first alignment layer 124 is parallel to the first direction X, and the alignment direction OA of the first alignment layer 124 is parallel to the extending direction of the lens 1230. In the alignment direction OA of the first alignment layer 124, a shape or contour of the lens 1230 does not change. After being arranged through the first alignment layer 124, the arrangement directions of the liquid crystal molecules are not affected by the lens 1230 either, avoiding an adverse effect on arrangement of the liquid crystal molecules caused by a difference between the extending direction of the lens 1230 and the alignment direction OA of the first alignment layer 124, so that the arrangement directions of the liquid crystal molecules on the first alignment layer 124 can have better consistency, greatly reducing occurrence of liquid crystal molecule disclination, and improving a display effect of the display device 100.

Embodiments of the present disclosure do not limit a manner of combining the display panel 110, the liquid crystal cell 120 and the linear polarization rotation structure 130. For example, the three may be bonded together, or may be fixed together by physical means such as snap-fitting or screw connection. FIG. 3 schematically shows that the lens group 123 is disposed on the first substrate 121, and the first substrate 121 is closer to the display panel 110 than the second substrate 122. However, embodiments of the present disclosure are not limited thereto. For example, the lens group 123 is disposed on the second substrate 122, and the liquid crystal layer 125 is closer to the display panel 110 than the lens group 123. For example, the lens group 123 is disposed on the first substrate 121, and the second substrate 122 is closer to the display panel 110 than the first substrate 121.

Embodiments of the present disclosure do not limit a structure, material, and processing and manufacturing method of the first alignment layer.

For example, the first alignment layer may be made of a same material as the lens group. For example, the first alignment layer may be integrally formed with the lens group, so that no additional manufacturing process is required to form the first alignment layer; for example, the first alignment layer is a groove structure integrally formed on a surface of the lens group through a mold, and an extending direction of the groove structure is the alignment direction of the first alignment layer. For example, the lens group may be formed first, and then the first alignment layer may be formed at a side of the lens group close to the liquid crystal layer through an alignment process to align the liquid crystal layer. For example, the alignment process may be a rubbing alignment process, and a rubbing direction of the rubbing alignment process is the alignment direction of the first alignment layer. Of course, embodiments of the present disclosure do not limit the alignment process.

For example, the first alignment layer is made of a different material from the lens group. For example, the lens group is formed first, and then an alignment film is coated at a side of the lens group close to the liquid crystal layer, and the first alignment layer is formed from the alignment film by using a rubbing alignment process or a photo-alignment process to align the liquid crystal layer.

In some examples, as shown in FIG. 3 and FIG. 5, a side of the lens 1230 close to the first alignment layer 124 includes a curved surface. When the extending direction of the lens 1230 is different from the alignment direction OA of the first alignment layer 124, in the alignment direction OA of the first alignment layer 124, the shape or contour of the lens 1230 is uneven, and consistency of arrangement of the liquid crystal molecules on the uneven contour is relatively poor. By making the alignment direction OA of the first alignment layer 124 the same as the extending direction of the lens 1230 through the linear polarization rotation structure 130, the shape or contour of the lens 1230 does not change in the alignment direction OA, so that the arrangement of the liquid crystal molecules on the first alignment layer 124 has better consistency.

For example, as shown in FIG. 3, the side of the lens 1230 close to the first alignment layer 124 may be a curved surface curved toward the first substrate 121. However, embodiments of the present disclosure are not limited thereto, and the side of the lens close to the first alignment layer 124 may be a curved surface curved toward the second substrate 122.

In some examples, as shown in FIG. 3 and FIG. 5, the first alignment layer 124 is conformally formed on a surface of the lens group 123. For example, a thickness of the first alignment layer 124 may be substantially uniform and have substantially a same shape as the surface of the lens group 123. When the first alignment layer 124 is conformally formed on the surface of the lens group 123, the liquid crystal molecules are arranged along the extending direction of the lens 1230. Since the shape or contour of the lens 1230 does not change in the alignment direction OA of the first alignment layer 124, the arrangement of the liquid crystal molecules is not affected by the curved surface shape of the lens 1230, so that the arrangement of the liquid crystal molecules on the first alignment layer 124 has better consistency. Embodiments of the present disclosure do not limit a process of forming the first alignment layer 124 on the surface of the lens group 123. For example, coating methods such as ultrasonic atomization deposition, inkjet printing, and electrohydrodynamic printing may be used.

In some examples, as shown in FIG. 4 and FIG. 5, the linear polarization rotation structure 130 includes a half-wave retarder, the half-wave retarder includes a fast axis and a slow axis, the polarization direction P of the linearly polarized light has an included angle θ with the first direction X, and the fast axis of the half-wave retarder is located on a center line L of the included angle. For example, the slow axis of the half-wave retarder is located on the center line of the included angle. The polarization direction P of the linearly polarized light exited from the display panel 110 can be rotated to be parallel to the first direction X through the half-wave retarder, so that the alignment direction OA of the first alignment layer 124 can be the same as the extending direction of the lens 1230.

FIG. 6 is a schematic view of the liquid crystal cell shown in FIG. 3 using a rubbing alignment process. As shown in FIG. 3, FIG. 5 and FIG. 6, the first alignment layer 124 and the second alignment layer 126 are aligned by a rubbing alignment process, and a rubbing direction R of the rubbing alignment process is parallel to the first direction X. Through the linear polarization rotation structure 130, the polarization direction P of the linearly polarized light exited from the display panel 110 can be rotated to be parallel to the first direction X, so that the alignment direction OA of the alignment layer can be the same as the extending direction of the lens 1230. At this time, the rubbing alignment process is used for alignment, and the rubbing direction R of a rubbing roller 190 of the rubbing alignment process is parallel to the first direction X, avoiding a situation shown in FIG. 1 and FIG. 2 where the rubbing roller 04 performs rubbing alignment along a direction different from the extending direction of the lens 02, and avoiding a risk of uneven rubbing or even inability to rub by the rubbing roller 190 caused thereby, thereby improving a yield of the rubbing alignment process. Moreover, after the rubbing alignment process is completed, the shape or contour of the lens 1230 does not change in the alignment direction OA of the alignment layer, and the arrangement of the liquid crystal molecules is not affected by the lens 1230 either, so that the arrangement of the liquid crystal molecules can have better consistency. Of course, embodiments of the present disclosure do not limit the alignment process of the alignment layer, and non-rubbing alignment processes may be used. For example, a photo-alignment process may be used.

In this example, the rubbing alignment process may directly act on the lens group 123 to directly form the first alignment layer 124 on the lens group 123. For example, the rubbing alignment process may also act on an alignment film coated on the lens group 123 to form the first alignment layer 124.

In some examples, as shown in FIG. 3, the liquid crystal cell 120 further includes a first electrode layer 127 and a second electrode layer 128, the first electrode layer 127 is disposed between the first substrate 121 and the lens group 123, the second electrode layer 128 is disposed between the second alignment layer 126 and the second substrate 122, and the first electrode layer 127 and the second electrode layer 128 are configured to apply an electric field to liquid crystal molecules of the liquid crystal layer 125 to drive the liquid crystal molecules to deflect. Under a vertical electric field of the first electrode layer 127 and the second electrode layer 128, the liquid crystal molecules of the liquid crystal layer 125 can deflect, and since refractive indices in a long axis direction and a short axis direction of the liquid crystal molecule are different, switching between two-dimensional and three-dimensional display of the display device 100 can be achieved.

For example, the liquid crystal molecules may be positive liquid crystals. Under the electric field of the first electrode layer 127 and the second electrode layer 128, the long axis direction of the liquid crystal molecule is parallel to a direction of the electric field line. When there is no electric field between the first electrode layer 127 and the second electrode layer 128, the long axis direction of the liquid crystal molecule is parallel to the first substrate 121.

For example, a refractive index in the short axis direction of the liquid crystal molecule is the same as a refractive index of the lens 1230. When there is no electric field between the first electrode layer 127 and the second electrode layer 128, the display device achieves two-dimensional display. When an electric field is formed between the first electrode layer 127 and the second electrode layer 128, the display device achieves three-dimensional display. Of course, embodiments of the present disclosure are not limited thereto. For example, the liquid crystal molecules is negative liquid crystals.

In some examples, as shown in FIG. 3 and FIG. 4, the display panel 100 and the liquid crystal cell 120 have substantially a same plane shape of a rectangle, and an included angle between the first direction X and a side of the rectangle is an acute angle. It should be noted that "substantially the same" means that an overlap area of the display panel 100 and the liquid crystal cell 120 is greater than or equal to 80%.

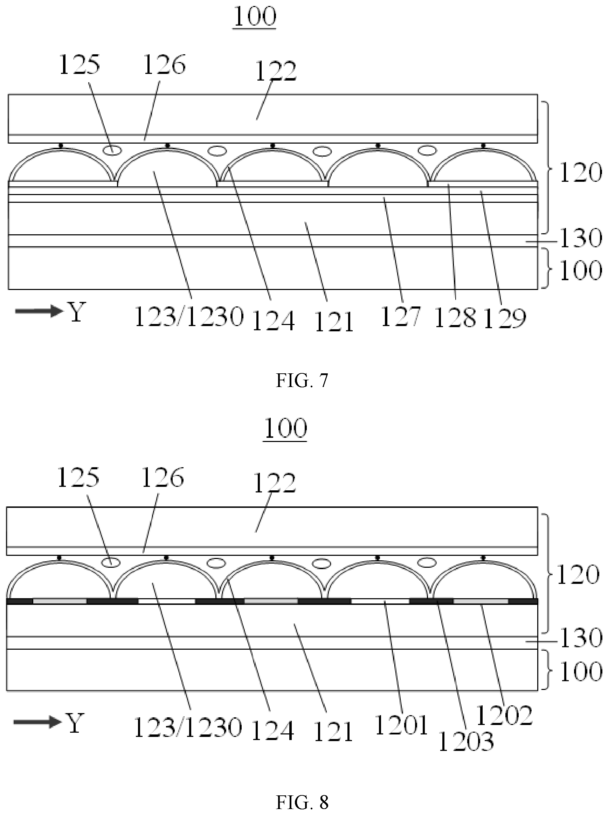

FIG. 7 is a schematic cross-sectional view of another display device provided by an embodiment of the present disclosure. As shown in FIG. 7, the liquid crystal cell 120 of the display device 100 includes a first substrate 121 and a second substrate 122 disposed opposite to each other, a lens group 123, a first alignment layer 124, a liquid crystal layer 125 and a second alignment layer 126. The liquid crystal cell 120 further includes a first electrode layer 127, a second electrode layer 128 and an insulating layer 129. The first electrode layer 127 is disposed between the first substrate 121 and the lens group 123, the second electrode layer 128 is disposed between the first electrode layer 127 and the lens group 123, the insulating layer 129 is disposed between the first electrode layer 127 and the second electrode layer 128, and the first electrode layer 127 and the second electrode layer 128 are configured to apply an electric field to liquid crystal molecules of the liquid crystal layer 125 to drive the liquid crystal molecules to deflect. Under a horizontal electric field of the first electrode layer 127 and the second electrode layer 128, the liquid crystal molecules of the liquid crystal layer 125 can deflect, and since refractive indices in the long axis direction and the short axis direction of the liquid crystal molecule are different, switching between two-dimensional and three-dimensional display of the display device 100 can be achieved. FIG. 7 schematically shows that the lens group 123 is disposed on the first substrate 121, and the first substrate 121 is closer to the display panel 110 than the second substrate 122. However, embodiments of the present disclosure are not limited thereto. For example, the lens group 123 is disposed on the second substrate 122, and the liquid crystal layer 125 is closer to the display panel 110 than the lens group 123. For example, the lens group 123 is disposed on the first substrate 121, and the second substrate 122 is closer to the display panel 110 than the first substrate 121.

FIG. 8 is a schematic cross-sectional view of another display device provided by an embodiment of the present disclosure. As shown in FIG. 8, the liquid crystal cell 120 of the display device 100 includes a first substrate 121 and a second substrate 122 disposed opposite to each other, a lens group 123, a first alignment layer 124, a liquid crystal layer 125 and a second alignment layer 126. The liquid crystal cell 120 includes an electrode layer disposed between the first substrate 121 and the lens group 123. The electrode layer includes a plurality of first strip electrodes 1201 and a plurality of second strip electrodes 1202, the plurality of first strip electrodes 1201 and the plurality of second strip electrodes 1202 are alternately arranged at intervals along the second direction Y, and the first strip electrode 1201 and the second strip electrode 1202 are configured to apply an electric field to liquid crystal molecules of the liquid crystal layer 125 to drive the liquid crystal molecules to deflect. For example, in the second direction Y, an insulating structure 1203 is included between the first strip electrodes 1201 and second strip electrodes 1202 arranged alternately at intervals .

In this example, under a horizontal electric field of the first strip electrodes 1201 and the second strip electrodes 1202, the liquid crystal molecules of the liquid crystal layer 125 can deflect, and since refractive indices in a long axis direction and a short axis direction of the liquid crystal molecule are different, switching between two-dimensional and three-dimensional display of the display device 100 can be achieved. FIG. 8 schematically shows that the lens group 123 is disposed on the first substrate 121, and the first substrate 121 is closer to the display panel 110 than the second substrate 122. However, embodiments of the present disclosure are not limited thereto. For example, the lens group 123 is disposed on the second substrate 122, and the liquid crystal layer 125 is closer to the display panel 110 than the lens group 123. For example, the lens group 123 is disposed on the first substrate 121, and the second substrate 122 is closer to the display panel 110 than the first substrate 121.

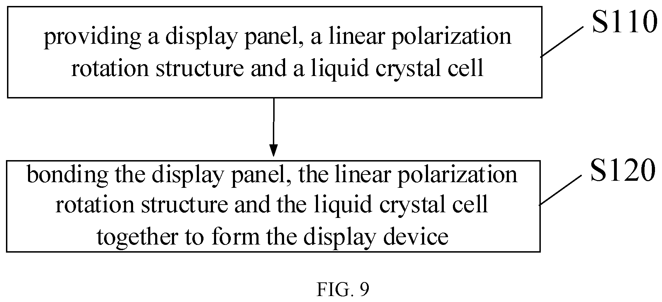

An embodiment of the present disclosure provides a manufacturing method of a display device. FIG. 9 is a flowchart of a manufacturing method of a display device provided by an embodiment of the present disclosure. As shown in FIG. 9, the manufacturing method of the display device includes:
S110: providing a display panel, a linear polarization rotation structure and a liquid crystal cell;
S120: bonding the display panel, the linear polarization rotation structure and the liquid crystal cell together to form the display device, wherein exiting light from the display panel is linearly polarized light, the linear polarization rotation structure is configured to rotate a polarization direction of the linearly polarized light to a first direction, the liquid crystal cell includes a lens group, a first alignment layer and a liquid crystal layer which are sequentially stacked, the lens group includes a plurality of lenses extending in the first direction and arranged in a second direction intersecting with the first direction, and an alignment direction of the first alignment layer is parallel to the first direction.

In the manufacturing method of the display device provided by the embodiment of the present disclosure, since arrangement directions of liquid crystal molecules (e.g., long axis directions of the liquid crystal molecules) needs to be parallel to the polarization direction of exiting light of the display panel, that is, the alignment direction of the alignment layer needs to be parallel to the polarization direction of the exiting light of the display panel, by rotating the polarization direction of the linearly polarized light exited from the display panel to be parallel to the first direction through the linear polarization rotation structure, the alignment direction of the first alignment layer is parallel to the first direction, and the alignment direction of the first alignment layer is parallel to an extending direction of the lens. In the alignment direction of the first alignment layer, a shape or contour of the lens does not change. After being arranged through the first alignment layer, the arrangement of the liquid crystal molecules is not affected by the lens either, avoiding an adverse effect on arrangement of the liquid crystal molecules caused by a difference between the extending direction of the lens and the alignment direction of the first alignment layer, so that the arrangement directions of the liquid crystal molecules on the first alignment layer can have better consistency, greatly reducing occurrence of liquid crystal molecule disclination, and improving a display effect of the display device.

In some examples, in the manufacturing method of the display device, the linear polarization rotation structure includes a half-wave retarder, the half-wave retarder includes a fast axis and a slow axis, the polarization direction of the linearly polarized light has an included angle with the first direction, and bonding the display panel, the linear polarization rotation structure and the liquid crystal cell together includes: setting the fast axis or the slow axis of the half-wave retarder to be parallel to a center line of the included angle. Through the half-wave retarder, the linearly polarized light exited from the display panel can be rotated to be parallel to the first direction, so that the alignment direction of the alignment layer can be the same as the extending direction of the lens.

In some examples, in the manufacturing method of the display device, providing the liquid crystal cell includes: providing a first substrate and a second substrate, forming the lens group on the first substrate, forming the first alignment layer on a surface of the lens group, performing an alignment process on the first alignment layer so that the alignment direction of the first alignment layer is parallel to the first direction, forming a second alignment layer on the second substrate, and performing an alignment process on the second alignment layer so that an alignment direction of the second alignment layer is parallel to the first direction.

In some examples, in the manufacturing method of the display device, performing the alignment process on the first alignment layer includes: using a rubbing alignment process to align the first alignment layer in the first direction. Through the linear polarization rotation structure, the linearly polarized light exited from the display panel can be rotated to be parallel to the first direction, so that the alignment direction of the alignment layer can be the same as the extending direction of the lens. At this time, the rubbing alignment process is used for alignment, and a rubbing direction of a rubbing roller of the rubbing alignment process is parallel to the first direction, avoiding a situation shown in FIG. 1 and FIG. 2 where the rubbing roller performs rubbing alignment along a direction different from the extending direction of the lens, and avoiding a risk of uneven rubbing or even inability to rub by the rubbing roller caused thereby, thereby improving a yield of the rubbing alignment process. Moreover, after the rubbing alignment process is completed, a shape or contour of the lens does not change in the alignment direction of the alignment layer, and the arrangement of liquid crystal molecules is not affected by the lens either, so that the arrangement of liquid crystal molecules can have better consistency. Of course, embodiments of the present disclosure do not limit the alignment process of the alignment layer, and non-rubbing alignment processes may be used. For example, a photo-alignment process may be used.

In some examples, in the manufacturing method of the display device, performing the alignment process on the second alignment layer includes: using a rubbing alignment process to align the second alignment layer in the first direction.

In some examples, in the manufacturing method of the display device, providing the liquid crystal cell includes: providing a first substrate and a second substrate, forming the lens group on the first substrate, performing an alignment process on a surface of the lens group to form the first alignment layer, forming a second alignment layer on the second substrate, and performing an alignment process on the second alignment layer so that an alignment direction of the second alignment layer is parallel to the first direction.

For example, performing the alignment process on the surface of the lens group to form the first alignment layer includes: using a rubbing alignment process to perform the alignment process on the surface of the lens group in the first direction to form the first alignment layer. Of course, embodiments of the present disclosure do not limit the alignment process.

In some examples, in the manufacturing method of the display device, providing the liquid crystal cell includes: providing a first substrate and a second substrate, forming the lens group and the first alignment layer on the first substrate, forming a second alignment layer on the second substrate, and performing an alignment process on the second alignment layer so that an alignment direction of the second alignment layer is parallel to the first direction. The first alignment layer is formed on a surface of the lens group through an integral molding process, so that no additional manufacturing process is required to form the first alignment layer.

The following points required to be explained:
(1) In drawings of embodiments of the present disclosure, only structures related to embodiments of the present disclosure are involved, and other structures may refer to conventional designs.
(2) Without conflict, features of a same embodiment and different embodiments of the present disclosure may be combined with each other.

The above are only specific embodiments of the present disclosure, but a protection scope of the present disclosure is not limited thereto. Any changes or replacements that can be easily conceived by those skilled in the art within a technical scope disclosed by the present disclosure shall fall within the protection scope of the present disclosure. Therefore, the protection scope of the present disclosure shall be subject to a protection scope of the claims.

## Claims

1. A display device, comprising:
a display panel, wherein exiting light from the display panel is linearly polarized light;
a liquid crystal cell, disposed at a light-exiting side of the display panel and comprising:
a first substrate and a second substrate disposed opposite to each other;
a lens group, disposed on the first substrate and located between the first substrate and the second substrate, and comprising a plurality of lenses, wherein the plurality of lenses extend in a first direction and are arranged in a second direction intersecting with the first direction;
a first alignment layer, disposed at a side of the lens group close to the second substrate;
a liquid crystal layer, disposed at a side of the first alignment layer close to the second substrate; and
a second alignment layer, disposed at a side of the second substrate facing the liquid crystal layer,
a linear polarization rotation structure, disposed between the display panel and the liquid crystal cell,
wherein alignment directions of the first alignment layer and the second alignment layer are parallel to the first direction, a polarization direction of the linearly polarized light exited from the display panel has an included angle with the first direction, and the linear polarization rotation structure is configured to rotate the polarization direction of the exiting light to be parallel to the first direction.

2. The display device according to claim 1, wherein a side of one of the plurality of lenses close to the first alignment layer comprises a curved surface.

3. The display device according to claim 2, wherein the first alignment layer is conformally formed on a surface of the lens group.

4. The display device according to claim 1, wherein the linear polarization rotation structure comprises a half-wave retarder, and the half-wave retarder comprises a fast axis and a slow axis, the fast axis is located on a center line of the included angle or the slow axis is located on the center line of the included angle.

5. The display device according to claim 1, wherein the first alignment layer and the second alignment layer are aligned by a rubbing alignment process, and a rubbing direction of the rubbing alignment process is parallel to the first direction.

6. The display device according to any one of claims 1-5, wherein the liquid crystal cell further comprises:
a first electrode layer, disposed between the first substrate and the lens group; and
a second electrode layer, disposed between the second alignment layer and the second substrate,
wherein the first electrode layer and the second electrode layer are configured to apply an electric field to liquid crystal molecules of the liquid crystal layer to drive the liquid crystal molecules to deflect.

7. The display device according to any one of claims 1-5, wherein the liquid crystal cell further comprises:
a first electrode layer, disposed between the first substrate and the lens group;
a second electrode layer, disposed between the first electrode layer and the lens group; and
an insulating layer, disposed between the first electrode layer and the second electrode layer,
wherein the second electrode layer comprises a plurality of strip electrodes, and the first electrode layer and the second electrode layer are configured to apply an electric field to liquid crystal molecules of the liquid crystal layer to drive the liquid crystal molecules to deflect.

8. The display device according to any one of claims 1-5, wherein the liquid crystal cell further comprises:
an electrode layer, disposed between the first substrate and the lens group,
wherein the electrode layer comprises a plurality of first strip electrodes and a plurality of second strip electrodes, the plurality of first strip electrodes and the plurality of second strip electrodes are alternately arranged at intervals along the second direction, and the plurality of first strip electrodes and the plurality of second strip electrodes are configured to apply an electric field to liquid crystal molecules of the liquid crystal layer to drive the liquid crystal molecules to deflect.

9. The display device according to claim 6, wherein refractive indices of the plurality of lenses of the lens group are the same as a refractive index of the liquid crystal layer in an axial direction of the liquid crystal molecules.

10. The display device according to any one of claims 1-9, wherein the display panel and the liquid crystal cell have substantially a same planar shape of a rectangle, and an included angle between the first direction and an edge of the rectangle is an acute angle.

11. A manufacturing method of a display device, comprising:
providing a display panel, a linear polarization rotation structure and a liquid crystal cell; and
bonding the display panel, the linear polarization rotation structure and the liquid crystal cell together to form the display device,
wherein exiting light from the display panel is linearly polarized light, and the linear polarization rotation structure is configured to rotate a polarization direction of the linearly polarized light to a first direction,
the liquid crystal cell comprises a lens group, a first alignment layer and a liquid crystal layer which are sequentially stacked, wherein the lens group comprises a plurality of lenses extending in the first direction and arranged in a second direction intersecting with the first direction,
an alignment direction of the first alignment layer is parallel to the first direction.

12. The manufacturing method according to claim 11, wherein the linear polarization rotation structure comprises a half-wave retarder, the half-wave retarder comprises a fast axis and a slow axis, and the polarization direction of the linearly polarized light has an included angle with the first direction,
bonding the display panel, the linear polarization rotation structure and the liquid crystal cell together comprises:
setting the fast axis or the slow axis of the half-wave retarder to be parallel to a center line of the included angle.

13. The manufacturing method according to claim 11, wherein providing the liquid crystal cell comprises:
providing a first substrate and a second substrate,
forming the lens group on the first substrate,
forming the first alignment layer on a surface of the lens group,
performing an alignment process on the first alignment layer so that the alignment direction of the first alignment layer is parallel to the first direction,
forming a second alignment layer on the second substrate,
performing an alignment process on the second alignment layer so that an alignment direction of the second alignment layer is parallel to the first direction.

14. The manufacturing method according to claim 13, wherein performing the alignment process on the first alignment layer comprises: using a rubbing alignment process to align the first alignment layer in the first direction.

15. The manufacturing method according to claim 11, wherein providing the liquid crystal cell comprises:
providing a first substrate and a second substrate,
forming the lens group on the first substrate,
performing an alignment process on a surface of the lens group to form the first alignment layer,
forming a second alignment layer on the second substrate,
performing an alignment process on the second alignment layer so that an alignment direction of the second alignment layer is parallel to the first direction.

16. The manufacturing method according to claim 11, wherein providing the liquid crystal cell comprises:
providing a first substrate and a second substrate,
forming the lens group and the first alignment layer on the first substrate,
forming a second alignment layer on the second substrate,
performing an alignment process on the second alignment layer so that an alignment direction of the second alignment layer is parallel to the first direction,
wherein the first alignment layer is formed on a surface of the lens group through an integral molding process.
